(19) Europäisches Patentamt

European Patent Office

Office européen des brevets

(11) **EP 0 958 386 B1**

(12) **EUROPÄISCHE PATENTSCHRIFT**

(45) Veröffentlichungstag und Bekanntmachung des Hinweises auf die Patenterteilung:
**13.08.2003 Patentblatt 2003/33**

(21) Anmeldenummer: **97921514.2**

(22) Anmeldetag: **15.05.1997**

(51) Int Cl.[7]: **C21B 13/00**, C21B 13/14, C22B 5/14

(86) Internationale Anmeldenummer:
**PCT/AT97/00098**

(87) Internationale Veröffentlichungsnummer:
**WO 97/044496 (27.11.1997 Gazette 1997/51)**

(54) **VERFAHREN ZUM REDUZIEREN VON FEINERZ IM WIRBELSCHICHTVERFAHREN SOWIE DESSEN VERWENDUNG ZUR HERSTELLUNG VON FLÜSSIGEM ROHEISEN ODER STAHL**

PROCESS FOR REDUCING ORE FINES BY FLUIDISATION AND USE THEREOF FOR THE PRODUCTION OF MOLTEN PIG IRON OR STEEL

PROCEDE POUR LA REDUCTION DE MINERAIS PULVERULENTS PAR FLUIDISATION ET SON UTILISATION POUR L'ELABORATION DE LA FONTE BRUTE OU DE L'ACIER EN FUSION

(84) Benannte Vertragsstaaten:
**BE DE FR GB IT LU NL SE**

(30) Priorität: **17.05.1996 AT 87596**

(43) Veröffentlichungstag der Anmeldung:
**24.11.1999 Patentblatt 1999/47**

(73) Patentinhaber:
• **VOEST-ALPINE INDUSTRIEANLAGENBAU GMBH**
**4020 Linz (AT)**
• **POHANG IRON & STEEL CO., LTD.**
**Pohang City, Kyong Sang Book-Do 790-785 (KR)**
• **RESEARCH INSTITUTE OF INDUSTRIAL SCIENCE & TECHNOLOGY, INCORPORATED FOUNDATION**
**Pohang City, Kyong Sang Book-do 790-330 (KR)**

(72) Erfinder:
• **KEPPLINGER, Leopold, Werner**
**A-4060 Leonding (AT)**

• **WALLNER, Felix**
**A-4020 Linz (AT)**
• **SCHENK, Johannes-Leopold**
**A-4040 Linz (AT)**
• **HAUZENBERGER, Franz**
**A-4502 St. Marien (AT)**
• **LEE, Il-Ock**
**Nam-gu, Pohang 790-390 (KR)**

(74) Vertreter: **Kopecky, Helmut, Dipl.-Ing.**
**Kopecky & Schwarz**
**Patentanwälte**
**Wipplingerstrasse 32/22**
**1010 Wien (AT)**

(56) Entgegenhaltungen:
WO-A-96/10094        WO-A-97/13880
US-A- 5 338 336        US-A- 5 407 179

**Beschreibung**

Die Erfindung betrifft ein Verfahren zum Behandeln, vorzugsweise zum Reduzieren, teilchenförmigen Materials im Wirbelschichtverfahren, insbesondere zum Reduzieren von Feinerz, wobei das teilchenformige Material durch ein von unten nach oben strömendes Behandlungsgas in einer Wirbelschicht gehalten und dabei behandelt wird, sowie die Verwendung eines Gefäßes zur Durchführung des Verfahrens.

Ein Verfahren dieser Art ist beispielsweise aus der US-A - 2,909,423, der WO 92/02458 und der EP-A - 0 571 358 bekannt. Hierbei wird oxidhältiges Material, z.B. Feinerz, in einer von einem Reduktionsgas aufrecht erhaltenen Wirbelschicht innerhalb eines Wirbelschicht-Reduktionsreaktors reduziert, wobei das Reduktionsgas, das über einen Düsenrost in den Wirbelschicht-Reduktionsreaktor eingeleitet wird, den Reduktionsreaktor von unten nach oben durchströmt, wogegen das oxidhältige Material den Reduktionsreaktor etwa im Querstrom zum Reduktionsgasstrom durchsetzt. Für das Aufrechterhalten der Wirbelschicht ist eine bestimmte Geschwindigkeit des Reduktionsgases innerhalb der Wirbelschichtzone erforderlich, die von der Teilchengröße des eingesetzten Materials abhängt.

Aufgrund der bei den bekannten Verfahren notwendigen relativ hohen Geschwindigkeit des Reduktionsgases kommt es zu einem starken Austragen von Feinstanteilen des oxidhältigen Materials sowie bei fortgeschrittener Reduktion zu einem Austragen von bereits reduziertem oxidhältigem Material, aus der Wirbelschicht, wobei diese Feinstanteile dann im Reduktionsgas enthalten sind. Um diese Feinstanteile aus dem Reduktionsgas zu entfernen - einerseits um das teiloxidierte Reduktionsgas weiterverwenden zu können, beispielsweise für vorgeordnete Reduktionsreaktoren, bzw. zur Rückgewinnung des sonst in Verlust geratenen oxidhältigen Materials bzw. bereits reduzierten Materials -, wird das die Feinstanteile enthaltende Reduktionsgas durch Staubabscheider, wie Zyklone geführt, und es wird der abgeschiedene Staub wieder in die Wirbelschicht zurückgeführt. Die Staubabscheider bzw. Zyklone sind vorzugsweise innerhalb der Reaktoren angeordnet (vgl. US-A - 2,909,423); sie können jedoch auch außerhalb der Reaktoren installiert sein.

In der Praxis hat sich gezeigt, daß teilreduzierte bzw. ausreduzierte feinkörnige Teilchen des oxidhältigen Materials dazu neigen, aneinander und/oder an den Wänden der Reaktoren bzw. Zyklone und Verbindungsleitungen bzw. Förderleitungen festzukleben bzw. anzubacken. Dieses Phänomen wird als "sticking" bzw. "fouling" bezeichnet. Das "sticking" respektive "fouling" ist abhängig von der Temperatur und dem Reduktionsgrad des oxidhältigen

Materials. Durch das Festkleben bzw. Anlegen des teil- oder ausreduzierten oxidhältigen Materials an den Wänden der Reduktionsreaktoren bzw. anderen Anlagenteilen kann es zu Störungen kommen, so daß es nicht möglich ist, die Anlage ohne Abstellen kontinuierlich über einen längeren Zeitraum zu betreiben. Es hat sich gezeigt, daß ein kontinuierlicher Betrieb über ein Jahr hinaus nur schwer möglich ist.

Das Entfernen der Anlegungen bzw. Anbackungen ist sehr arbeitsintensiv und verursacht hohe Kosten, u.zw. Arbeitskosten sowie Kosten, die durch den Produktionsausfall der Anlage bedingt sind. Oftmals kommt es zu einem selbsttätigen Ablösen der Anlegungen, wodurch diese entweder in die Wirbelschicht fallen und so zu einer Störung des Reduktionsprozesses führen, oder - wenn die Anlegungen sich vom Zyklon lösen - eine Verlegung der vom Zyklon zur Wirbelschicht führenden Staubrückführungskanäle bewirken, so daß eine weitere Staubabscheidung aus dem Reduktionsgas gänzlich unmöglich ist.

Ein Nachteil der bekannten Wirbelschichtverfahren liegt in der Praxis in der Unflexibilität und Schwierigkeit bei der Aufteilung und Einspeisung des Behandlungsgasstromes, d.h. bei den oben beschriebenen Verfahren nach dem Stand der Technik bei der Aufteilung und Einspeisung des Reduktionsgasstromes. Es ist weiters beim Stand der Technik nachteilig, daß bei jeder Prozeßstufe, also der Vorwärmung, Vorreduktion und Endreduktion, meist zwei oder mehrere Produktströme aus den Prozeßstufen zugeordneten Apparaten ausgeschleust werden müssen, was einen erheblichen Aufwand an Förder- und Schleuseneinrichtungen bedeutet. Zudem müssen bei jeder Prozeßstufe zwei Gasversorgungssysteme geregelt werden, was bei heißen staubhältigen Gasen in der Praxis große Schwierigkeiten bereitet.

Hierzu kommt, daß infolge der relativ hohen Geschwindigkeit des Reduktionsgases ein erheblicher Verbrauch an Reduktionsgas vorliegt. Es wird wesentlich mehr Reduktionsgas verbraucht, als für den eigentlichen Reduktionsvorgang notwendig wäre, wobei der Mehrverbrauch lediglich dazu dient, die Wirbelschicht aufrecht zu erhalten.

Ein Verfahren zur Reduktion von Metallerzen mittels eines Wirbelschichtverfahrens ist auch aus der GB-A - 1 101 199 bekannt. Hierbei sind die Verfahrensbedingungen so gewählt, daß es bei der Reduktion zu einem Zusammenbacken des Materials kommt, wodurch Agglomerate gebildet werden, die aufgrund ihrer Größe nicht fluidisiert werden. Dadurch gelingt eine Trennung des fertigreduzierten Materials, das nach unten aus dem Wirbelschichtreaktor ausgetragen wird, vom nicht fertigreduzierten Material, das fluidisiert bleibt. Kleinere Produktteilchen werden am oberen Ende der Wirbelschicht abgezogen. Bei diesem Verfahren fallen also ebenfalls zwei Produktströme an, wodurch ein entsprechender apparativer Aufwand erforderlich ist.

Die Erfindung bezweckt die Vermeidung dieser Nachteile und Schwierigkeiten und stellt sich die Aufgabe, ein Verfahren der eingangs beschriebenen Art sowie ein Gefäß zur Durchrührung des Verfahrens zu schaffen, welche ein Behandeln von teilchenförmigem oxidhältigem Material bei minimalem Verbrauch von Behandlungsgas über einen sehr langen Zeitraum ohne die Gefahr von durch "sticking" bzw. "fouling" verursachten Betriebsunterbrechungen ermöglichen. Insbesondere soll die zur Aufrechterhaltung der Wirbelschicht erforderliche Menge an Behandlungsgas sowie dessen Strömungsgeschwindigkeit stark herabgesetzt werden können, so daß nur ein minimaler Austrag von Feinteilchen stattfindet.

Diese Aufgabe wird erfindungsgemäß dadurch gelöst, daß teilchenförmiges Material mit einer breiten Kornverteilung mit einem relativ hohen Feinanteil und einem Anteil an größeren Teilchen zur Behandlung eingesetzt wird, wobei der mittlere Korndurchmesser des Kornbandes 0,02 bis 0,15 des größten Korndurchmessers des teilchenförmigen Materials beträgt, und daß die Leerrohrgeschwindigkeit des Behandlungsgases in der Wirbelschicht (2) kleiner gehalten wird als die für eine Fluidisierung der größten Teilchen des teilchenförmigen Materials notwendige Geschwindigkeit, wobei sämtliche größeren Teilchen gemeinsam mit dem Feinanteil nach oben bewegt und aus dem oberen Bereich der Wirbelschicht ausgetragen werden.

Es hat sich gezeigt, daß bei einer breiten gleichmäßigen Kornverteilung die Leerrohrgeschwindigkeit in der Wirbelschicht in einem Bereich von 0,25 bis 0,75 der für eine Fluidisierung der größten Teilchen des teilchenförmigen Materials notwendigen Geschwindigkeit aufrecht erhalten werden kann.

Vorzugsweise wird ein teilchenförmiges Material mit einem Korn eingesetzt, von dem der mittlere Korndurchmesser des Kornbandes 0,05 bis 0,10 des größten Korndurchmessers des teilchenförmigen Materials beträgt.

Hierbei wird zweckmäßig für das Behandlungsgas oberhalb der Wirbelschicht eine Leerrohrgeschwindigkeit bezogen auf den größten Querschnitt eines die Wirbelschicht aufnehmenden Gefäßes für ein theoretisches Grenzkorn von 50 bis 150 µm, vorzugsweise 60 bis 100 µm, eingestellt, wobei vorteilhaft für das Reduzieren von "Run of Mine" Feinerzen eine Leerrohrgeschwindigkeit in der Wirbelschicht zwischen 0,3 m/s und 2,0 m/s eingestellt wird.

Ein Verfahren zur Herstellung von flüssigem Roheisen oder flüssigen Stahlvorprodukten aus von Eisenerzen und Zuschlägen gebildeten, zumindest teilweise einen Feinanteil aufweisenden Einsatzstoffen unter Anwendung des erfindungsgemäßen Behandlungsverfahrens ist dadurch gekennzeichnet, daß die Einsatzstoffe in mindestens einer Reduktionszone im Wirbelschichtverfahren zu Eisenschwamm direkt reduziert werden, der Eisenschwamm in einer Einschmelzvergasungszone unter Zufuhr von Kohlenstoffträgern und sauerstoffhältigem Gas erschmolzen und ein CO- und $H_2$-hältiges Reduktionsgas erzeugt wird, welches in die Reduktionszone eingeleitet, dort umgesetzt, als Exportgas abgezogen und einem Verbraucher zugeführt wird.

Weiters umfaßt die Erfindung die Verwendung eines durch die Kombination folgender Merkmale gekennzeichneten Gefäßes zur Durchführung des erfindungsgemäßen Verfahrens:

- einen zylindrischen unteren, die Wirbelschicht aufnehmenden Wirbelschichtteil mit einem Gasverteilungsboden, einer Zuleitung für das Behandlungsgas und eine Zuführung und Abführung für teilchenförmiges Material oberhalb des Gasverteilungsbodens,
- einen oberhalb des Wirbelschichtteiles angeordneten und an diesen anschließenden, sich nach oben konisch erweiternden Konusteil, wobei die Neigung der Wand des Konusteiles zur Reaktormittelachse 6 bis 15°, vorzugsweise 8 bis 10°, beträgt,
- einen an den Konusteil anschließenden, zumindest teilweise zylindrischen Beruhigungsteil, der oben geschlossen ist und von dem eine Behandlungsgas-Ableitung ausgeht, wobei
- das Verhältnis der Querschnittsfläche des Beruhigungsteiles im zylindrischen Bereich zur Querschnittsfläche des Wirbelschichtteiles ≥ 2 ist.

Ein solches Gefäß ist zum Beispiel in der WO-A - 96/10094 beschrieben.

Ein Gefäß zur Durchrührung eines Erzreduktionsverfahrens in einer Wirbelschicht, das zwei zylindrische Teile unterschiedlichen Durchmessers und einen sehr kurzen und stark konischen Teil zwischen den zylindrischen Teilen aufweist, ist beispielsweise aus der EP-A - 0 022 098 bekannt. Bei diesem Gefäß sind jedoch zwei Gaszuführungen vorgesehen, und zwar eine unterhalb des unteren zylindrischen Teils und eine im konischen Teil. Das fertigreduzierte Erz wird aus diesem Wirbelschichtreaktor nach unten ausgetragen.

Vorzugsweise ist erfindungsgemäß die Querschnittsfläche des Beruhigungsraumes im zylindrischen Bereich so groß, daß sich in diesem Bereich eine Leerrohrgeschwindigkeit einstellt, die zum Abscheiden eines Kornes größer 50µm aus dem Gas ausreichen würde.

Die Erfindung umfaßt auch die Verwendung einer Anlage zur Herstellung von flüssigem Roheisen oder flüssigen Stahlvorprodukten aus von Eisenerzen und Zuschlägen gebildeten, zumindest teilweise einen Feinanteil aufweisenden Einsatzstoffen, mit mindestens einem als Reduktionsreaktor ausgebildeten und mit den oben beschriebenen Merkmalen ausgestatteten Gefäß, in das eine Förderleitung für Eisenerz und Zuschläge enthaltende Einsatzstoffe, eine Gasleitung für ein Reduktionsgas sowie eine Förderleitung für das in ihm gebildete Reduktionsprodukt und eine Gasleitung für das Topgas münden, und mit einem Einschmelzvergaser, in den die das Reduktionsprodukt aus dem Reduktionsreaktor führende Förderleitung mündet und der Zuleitungen für sauerstoffhältige Gase und Kohlenstoffträger sowie einen Abstich für Roheisen bzw. Stahlvormaterial und Schlacke aufweist, wobei die in den Reduktionsreaktor mündende Gasleitung für im Einschmelzvergaser gebildetes Reduktionsgas vom Einschmelzvergaser ausgeht und der Reduktionsreaktor als Wirbelschicht-Reduktionsreaktor ausgebildet ist.

Die Erfindung ist nachfolgend anhand der Zeichnung näher erläutert, wobei Fig. 1 ein erfindungsgemäßes Gefäß im Schnitt und Fig. 2 ein Verfahrensschema zur Reduktion von Eisenerz zeigen, bei dem erfindungsgemäße Gefäße zur Anwendung kommen können. Fig. 3 veranschaulicht in Form eines Diagrammes Korngrößenverteilungen erfindungsgemäß zu behandelnder Eisenerze.

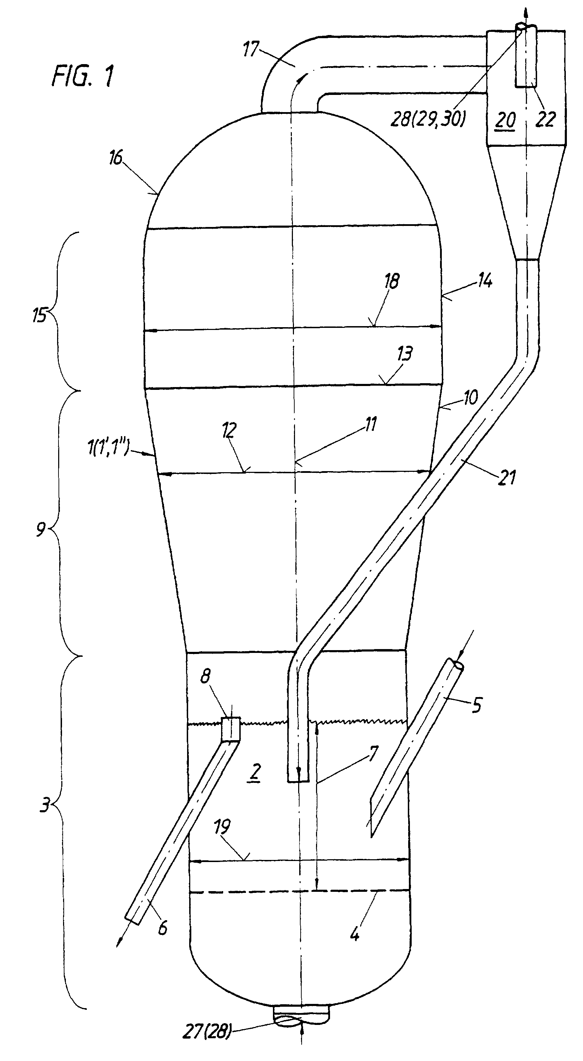

Das in Fig. 1 dargestellte Gefäß 1, das einen Wirbelschichtreaktor, insbesondere einen Reduktionsreaktor, darstellt, weist einen zylindrischen unteren, eine Wirbelschicht 2 aufnehmenden Wirbelschichtteil 3 auf, der in einer bestimmten Höhe mit einem als Düsenrost 4 ausgebildeten Gasverteilerboden zur Zuführung und gleichmäßigen Verteilung des Reduktionsgases versehen ist. Das Reduktionsgas durchströmt den Reduktionsreaktor ausgehend vom Düsenrost 4 von unten nach oben. Oberhalb des Düsenrostes 4 und noch innerhalb des zylindrischen Wirbelschichtteiles 3 münden Förderleitungen 5, 6, u.zw. Zu- und Abführungen für das Feinerz. Die Wirbelschicht 2 weist eine Schichthöhe 7 vom Düsenrost 4 bis zur Höhe der Abführung 6 für das Feinerz, d.h. deren Öffnung 8, auf.

An den zylindrischen Wirbelschichtteil 3 schließt ein sich nach oben konisch erweiternder Konusteil 9 an, wobei die Neigung der Wand 10 dieses Konusteiles 9 zur Reaktormittelachse 11 maximal 6 bis 15°, vorzugsweise 8 bis 10°, beträgt. In diesem Bereich kommt es durch die kontinuierliche Vergrößerung des Querschnittes 12 des Konusteiles 9 zu einer stetig und kontinuierlich zunehmenden Herabsetzung der Leerrohrgeschwindigkeit des nach oben strömenden Reduktionsgases.

Durch die nur geringe Neigung der Wand 10 des Konusteiles 9 gelingt es, trotz der Erweiterung des Querschnittes 12 in diesem Konusteil 9 eine Strömung ohne Wirbelbildung und Abreißen von der Wand 10 zu erzielen. Hierdurch werden Wirbelbildungen, die eine örtliche Erhöhung der Geschwindigkeit des Reduktionsgases hervorrufen würden, vermieden.

Dadurch ist eine gleichmäßige und kontinuierliche Herabsetzung der Leerrohrgeschwindigkeit des Reduktionsgases über den Querschnitt 12 über die gesamte Höhe des Konusteiles 9, d.h. in jeder Höhe desselben, gewährleistet.

Am oberen Ende 13 des Konusteiles 9 schließt ein mit einer zylindrischen Wand 14 versehener Beruhigungsteil 15 an, der oben mit einer teil-kugelförmig, z. B. halbkugelförmig, gestalteten Reaktordecke 16 geschlossen ist. In der Reaktordecke 16 ist zentral eine Gasleitung 17 zur Ableitung des Reduktionsgases angeordnet. Die Vergrößerung des Querschnittsraumes des Konusteiles 9 ist derart ausgeführt, daß das Verhältnis der Querschnittsfläche 18 des Beruhigungsteiles 15 zur Querschnittsfläche 19 des Wirbelschichtteiles 3 ≥ 2 ist.

Die Gasleitung 17 führt zu einem der Staubabscheidung für das Reduktionsgas dienenden Zyklon 20. Eine vom Zyklon 20 ausgehende Staubrückführleitung 21 ist nach unten gerichtet und mündet in die Wirbelschicht 2. Die Gasableitung des Zyklons 20 ist mit 22 bezeichnet.

Erfindungsgemäß wird in dem Reduktionsreaktor 1 Feinerz mit einer breiten gleichmäßigen Kornverteilung mit einem relativ hohen Feinanteil verarbeitet. Eine Kornverteilung dieser Art wäre etwa die folgende:

|  | Massenanteile |
| --- | --- |
| bis 4 mm | 100 % |
| bis 1 mm | 72 % |
| bis 0,5 mm | 55 % |
| bis 0,125 mm | 33 % |

Es wurde herausgefunden, daß ein Feinerz mit etwa dieser Kornverteilung fluidisierbar ist, ohne daß eine Segregation in der Wirbelschicht 2 auftritt, wobei, und dies ist erfindungswesentlich, die Leerrohrgeschwindigkeit $v_{leer}$ stets kleiner ist als die minimale Fluidisierungsgeschwindigkeit für die größten Teilchen des Feinerzes.

Als optimaler Betriebsbereich für $v_{leer}$ wurde folgende Beziehung gefunden:

$$v_{leer} = 0,25 \text{ bis } 0,75 \cdot v_{min} (d_{max})$$

$v_{leer}$ - Leerrohrgeschwindigkeit in der Wirbelschicht 2 oberhalb des Verteilerbodens 4

$v_{min} (d_{max})$ - minimale Fluidisierungsgeschwindigkeit des größten Teilchens der eingesetzten Fraktion

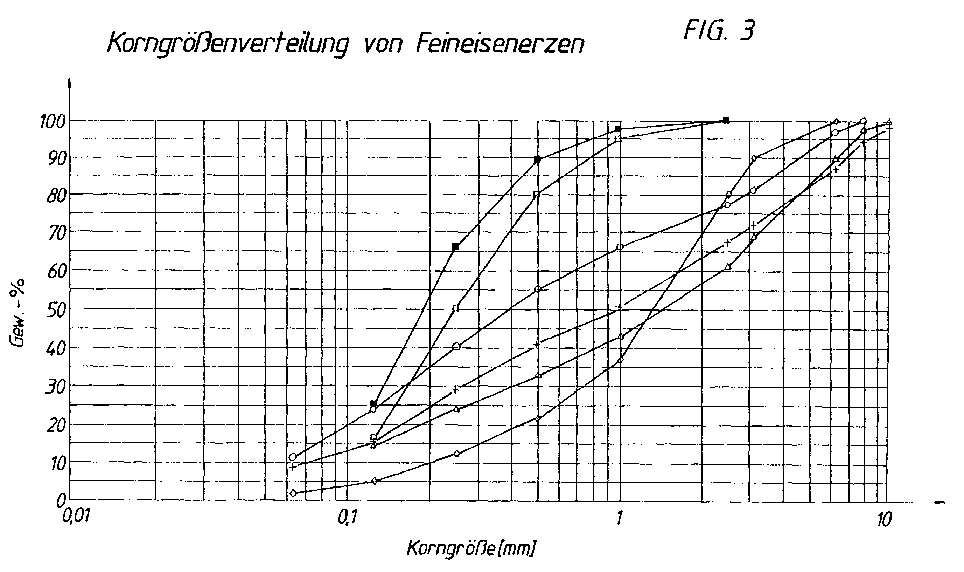

Für die Erfindung ist, wie bereits oben erwähnt, eine breite Kornverteilung des Feinerzes wesentlich. Eine solche Kornverteilung ist bei "Run of Mine" Feinerzen gegeben, also bei Feinerzen gegeben, die nach Zerkleinerung keiner Klassierung unterworfen werden. Einige Beispiele von Kornverteilungen von "Run of Mine" Eisenerzen sind in Fig. 3 enthalten. Bei diesen Kornverteilungen von "Run of Mine" Eisenerzen ist stets ein größerer Anteil einer Feinfraktion vorhanden, die so klein ist, daß sie nicht im Wirbelbett bleibt, sondern mit dem Gas ausgetragen wird und über die Zyklone wieder rückgeführt wird. Die Feinfraktion ist notwendig, um die Fluidisierung der sehr großen Teilchen bei nur relativ geringer Leerrohrgeschwindigkeit des Behandlungsgases zu gewährleisten.

Erfindungsgemäß wird der Effekt genutzt, daß es bei einer breiten Kornverteilung zu einer Impulsübertragung des Impulses der kleinen Teilchen auf die größeren Teilchen kommt. Hierdurch gelingt die Fluidisierung großer Teilchen, auch wenn die Leerrohrgeschwindigkeit des Reduktionsgases unterhalb der für die großen Teilchen erforderlichen Leerrohrgeschwindigkeit liegt. Erfindungsgemäß kann Feinerz mit natürlicher Kornverteilung (Run of Mine) ohne vorherige Klassierung mit $d_{max}$ vorzugsweise bis 12 mm, maximal bis 16 mm, eingesetzt werden.

Durch den Einsatz des Reduktionsreaktors, der nach den oben genannten Kriterien ausgelegt ist, und den Einsatz von Feinerz mit einem relativ hohen Feinanteil ergeben sich folgende Vorteile für das Fluidisierungsverhalten:

- Flexibles System im Hinblick auf Änderung der Feststoffdichte und Korngrößenverteilung bei wechselndem Rohstoffeinsatz
- Unempfindlich gegenüber Kornzerfall und damit Änderung des Feinanteiles zwischen Einsatz- und Produktstrom.

Das Gefäß 1 kann auch mit gleichen Vorteilen als Vorwärmgefäß sowie als Vor- und End-Reduktionsgefäß eingesetzt werden.

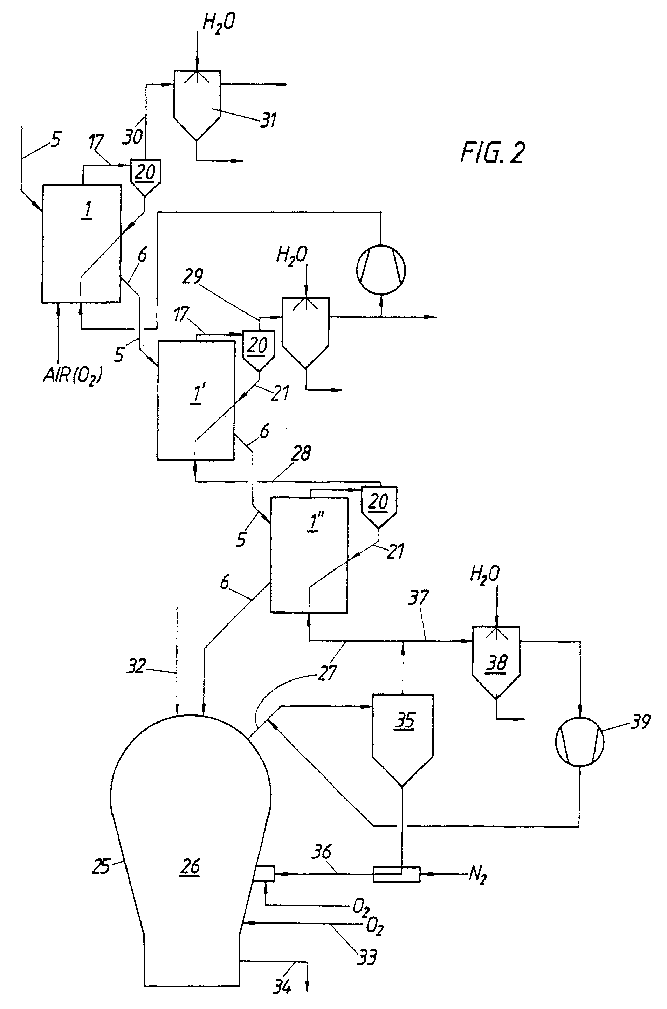

Eine Anlage, bei der ein oben beschriebenes, erfindungsgemäß ausgestaltetes Gefäß 1 mit Vorteil zum Einsatz gelangt, ist nachfolgend anhand der schematischen Fig. 2 näher beschrieben:

Eine Anlage zum Herstellen von Roheisen oder Stahlvorprodukten weist drei in Serie hintereinander geschaltete Wirbelschichtreaktoren 1, 1', 1" der oben beschriebenen Bauart auf, wobei eisenoxidhältiges Material, wie "Run of Mine" Feinerz, über eine Erzzuleitung 5 dem ersten Wirbelschichtreaktor 1, in dem in einer Vorwärmstufe eine Vorerwärmung des Feinerzes und eventuell eine Vorreduktion stattfindet, zugeleitet und anschließend von Wirbelschichtreaktor 1 zu Wirbelschichtreaktor 1' bzw. von 1' zu 1" über Förderleitungen 5, 6 geleitet wird. In dem zweiten Wirbelschichtreaktor 1' erfolgt in einer Vor-Reduktionsstufe eine Vorreduktion und im nachgeordneten Wirbelschichtreaktor 1" in einer End-Reduktionsstufe eine End-Reduktion des Feinerzes zu Eisenschwamm.

Das fertig reduzierte Material, also der Eisenschwamm, wird über eine Förderleitung 6 in einen Einschmelzvergaser 25 geleitet. Im Einschmelzvergaser 25 wird in einer Einschmelzvergasungszone 26 aus Kohle und sauerstoffhältigem Gas ein CO- und $H_2$-hältiges Reduktionsgas erzeugt, das über die Reduktionsgas-Zuleitung 27 in den in Fließrichtung des Feinerzes letztangeordneten Wirbelschichtreaktor 1" eingeleitet wird. Das Reduktionsgas wird dann im Gegenstrom zum Erzdurchfluß von Wirbelschichtreaktor 1" zu Wirbelschichtreaktor 1' bzw. von 1' zu 1 geführt, u.zw. über die Verbindungsleitungen 28, 29, aus dem Wirbelschichtreaktor 1 als Topgas über eine Topgas-Ableitung 30 abgeleitet und anschließend in einem Naßwäscher 31 gekühlt und gewaschen.

Der Einschmelzvergaser 25 weist eine Zuführung 32 für feste Kohlenstoffträger, eine Zuführung 33 für sauerstoffhältige Gase sowie gegebenenfalls Zuführungen für bei Raumtemperatur flüssige oder gasförmige Kohlenstoffträger, wie Kohlenwasserstoffe, sowie für gebrannte Zuschläge auf. In dem Einschmelzvergaser 25 sammelt sich unterhalb der Einschmelzvergasungszone 26 schmelzflüssiges Roheisen bzw. schmelzflüssiges Stahlvormaterial und schmelzflüssige Schlacke, die über einen Abstich 34 abgestochen werden.

In der Reduktionsgas-Zuleitung 27, die vom Einschmelzvergaser 25 ausgeht und in den Wirbelschichtreaktor mündet, ist eine Entstaubungseinrichtung, wie ein Heißgaszyklon 35, vorgesehen, wobei die in diesem Heißgaszyklon 35 abgeschiedenen Staubteile dem Einschmelzvergaser 25 über die Rückleitung 36 mit Stickstoff als Fördermittel und über einen Brenner unter Einblasen von Sauerstoff zugeführt werden.

Eine Möglichkeit zur Einstellung der Reduktionsgastemperatur ergibt sich durch die vorzugsweise vorgesehene Gasrückführleitung 37, die von der Reduktionsgas-Zuleitung 27 ausgeht und einen Teil des Reduktionsgases über einen Wäscher 38 und einen Verdichter 39 in diese Reduktionsgas-Zuleitung 27 wiederum zurückführt, u.zw. vor der Anordnung des Heißgaszyklons 35.

**Patentansprüche**

1. Verfahren zum Behandeln, vorzugsweise zum Reduzieren, teilchenförmigen oxidhältigen Materials im Wirbelschichtverfahren, insbesondere zum Reduzieren von Feinerz, wobei das teilchenformige Material durch ein von unten nach oben strömendes Behandlungsgas, insbesondere ein Reduktionsgas, in einer Wirbelschicht (2) gehalten und dabei behandelt insbesondere reduziert wird, **dadurch gekennzeichnet, daß** teilchenförmiges Material mit einer breiten Kornverteilung mit einem relativ hohen Feinanteil und einem Anteil an größeren Teilchen zur Behandlung eingesetzt wird, wobei der mittlere Korndurchmesser des Kornbandes 0,02 bis 0,15 des größten Korndurchmessers des teilchenförmigen Materials beträgt, und daß die Leerrohrgeschwindigkeit des Behandlungsgases in der Wirbelschicht (2) kleiner gehalten wird als die für eine Fluidisierung der größten Teilchen des teilchenförmigen Materials notwendige Geschwindigkeit, wobei sämtliche größeren Teilchen gemeinsam mit dem Feinanteil nach oben bewegt und aus dem oberen Bereich der Wirbelschicht ausgetragen werden.

2. Verfahren nach Anspruch 1, **dadurch gekenn-**

**zeichnet, daß** die Leerrohrgeschwindigkeit in der Wirbelschicht (2) in einem Bereich von 0,25 bis 0,75 der für eine Fluidisierung der größten Teilchen des teilchenförmigen Materials notwendigen Geschwindigkeit aufrecht erhalten wird.

3. Verfahren nach Anspruch 1 oder 2, **dadurch gekennzeichnet, daß** ein teilchenförmiges Material mit einem Korn eingesetzt wird, von dem der mittlere Korndurchmesser des Kornbandes 0,05 bis 0,10 des größten Korndurchmessers des teilchenförmigen Materials beträgt.

4. Verfahren nach einem oder mehreren der Ansprüche 1 bis 3, **dadurch gekennzeichnet, daß** für das Behandlungsgas oberhalb der Wirbelschicht (2) eine Leerrohrgeschwindigkeit bezogen auf den größten Querschnitt eines die Wirbelschicht (2) aufnehmenden Gefäßes für ein theoretisches Grenzkorn von 50 bis 150 μm, vorzugsweise 60 bis 100 μm, eingestellt wird.

5. Verfahren nach Anspruch 4, **dadurch gekennzeichnet, daß** für das Reduzieren von "Run of Mine" Feinerzen eine Leerrohrgeschwindigkeit in der Wirbelschicht (2) zwischen 0,3 m/s und 2,0 m/s eingestellt wird.

6. Verfahren zur Herstellung von flüssigem Roheisen oder flüssigen Stahlvorprodukten aus von Eisenerzen und Zuschlägen gebildeten, zumindest teilweise einen Feinanteil aufweisenden Einsatzstoffen, wobei die Einsatzstoffe in mindestens einer Reduktionszone im Wirbelschichtverfahren gemäß einem oder mehreren der Ansprüche 1 bis 5 zu Eisenschwamm direkt reduziert werden, der Eisenschwamm in einer Einschmelzvergasungszone (I bis IV) unter Zufuhr von Kohlenstoffträgern und sauerstoffhältigem Gas erschmolzen und ein CO- und H2-hältiges Reduktionsgas erzeugt wird, welches in die Reduktionszone eingeleitet, dort umgesetzt, als Exportgas abgezogen und einem Verbraucher zugeführt wird.

7. Verwendung eines durch die Kombination folgender Merkmale gekennzeichneten Gefäßes (1) zur Durchführung des Verfahrens nach einem oder mehreren der Ansprüche 1 bis 6:

   • einen zylindrischen unteren, die Wirbelschicht (2) aufnehmenden Wirbelschichtteil (3) mit einem Gasverteilungsboden (4), einer Zuleitung (35, 37) für das Behandlungsgas und eine Zuführung und Abführung für teilchenförmiges Material oberhalb des Gasverteilungsbodens (4),
   • einen oberhalb des Wirbelschichtteiles (3) angeordneten und an diesen anschließenden, sich nach oben konisch erweiternden Konusteil (9), wobei die Neigung der Wand (10) des Konusteiles (9) zur Reaktormittelachse (11) 6 bis 15°, vorzugsweise 8 bis 10°, beträgt,

   • einen an den Konusteil (9) anschließenden, zumindest teilweise zylindrischen Beruhigungsteil (15), der oben geschlossen ist und von dem eine Behandlungsgas-Ableitung (26, 37) ausgeht, wobei
   • das Verhältnis der Querschnittsfläche (19) des Beruhigungsteiles (15) im zylindrischen Bereich zur Querschnittsfläche (20) des Wirbelschichtteiles (3) $\geq 2$ ist.

8. Verwendung nach Anspruch 7, **dadurch gekennzeichnet, daß** die Querschnittsfläche (19) des Beruhigungsraumes (15) des Gefäßes (1) im zylindrischen Bereich so groß ist, daß sich in diesem Bereich eine Leerrohrgeschwindigkeit einstellt, die zum Abscheiden eines Kornes größer 50 μm aus dem Gas ausreichen würde.

9. Verwendung einer Anlage zur Herstellung von flüssigem Roheisen oder flüssigen Stahlvorprodukten, mit mindestens einem als Reduktionsreaktor (1, 1', 1") ausgebildeten und mit den Merkmalen des in Anspruch 7 oder 8 beschriebenen Gefäßes ausgestatteten Gefäß, in das eine Förderleitung (5) für Eisenerz und Zuschläge enthaltende Einsatzstoffe, eine Gasleitung (27, 28) für ein Reduktionsgas sowie eine Förderleitung (6) für das in ihm gebildete Reduktionsprodukt und eine Gasleitung (30) für das Topgas münden, und mit einem Einschmelzvergaser (25), in den die das Reduktionsprodukt aus dem Reduktionsreaktor (1, 1', 1") führende Förderleitung (6) mündet und der Zuleitungen (32, 33) für sauerstoffhältige Gase und Kohlenstoffträger sowie einen Abstich (34) für Roheisen bzw. Stahlvormaterial und Schlacke aufweist, wobei die in den Reduktionsreaktor (1, 1', 1") mündende Gasleitung (27) für im Einschmelzvergaser (25) gebildetes Reduktionsgas vom Einschmelzvergaser (25) ausgeht und der Reduktionsreaktor als Wirbelschicht-Reduktionsreaktor (1, 1', 1") ausgebildet ist, zur Durchführung des Verfahrens nach Anspruch 6.

## Claims

1. A method for treating, preferably reducing, a particulate oxide-containing material in the fluidized bed method, in particular for reducing fine ore, wherein said particulate material is maintained in a fluidized bed (2) by a treating gas, in particular a reducing gas, flowing from bottom to top and thereby is treated, in particular reduced, **characterized in that** a particulate material having a wide grain distribution containing a relatively high portion of fines and a portion of larger particles is used for treatment, wherein a medium grain diameter of the grain band amounts to from 0.02 to 0.15 of the largest grain diameter of said particulate material, and that the empty-tube velocity of the treating gas in the fluidized bed (2) is kept to be smaller than the velocity required for fluidizing the largest particles of said particulate material, whereby all larger particles are moved upwards together with the content of fines and are discharged from the upper region of the fluidized bed.

2. A method according to claim 1, **characterized in that** the empty-tube velocity in the fluidized bed (2) is maintained within a range of from 0.25 to 0.75 of the velocity required for fluidizing the largest particles of said particulate material.

3. A method according to claim 1 or 2, **characterized in that** a particulate material with a grain having a medium grain diameter of the grain band of from 0.05 to 0.10 of the largest grain diameter of said particulate material is used.

4. A method according to one or several of claims 1 to 3, **characterized in that**, for the treating gas above the fluidized bed (2), an empty-tube velocity relative to the largest diameter of a vessel designated for receiving the fluidized bed (2) is adjusted for a theoretic cut grain size of from 50 to 150 μm, preferably from 60 to 100 μm.

5. A method according to claim 4, **characterized in that** in the fluidized bed (2) an empty-tube velocity ranging between 0.3 m/s and 2.0 m/s is adjusted for reducing run-of-mine fine ores.

6. A method for producing liquid pig iron or liquid steel pre-products from charging substances formed from iron ores and fluxes and having, at least partially, a content of fines, wherein the charging substances are directly reduced to sponge iron in at least one reduction zone by the fluidized-bed method according to one or several of claims 1 to 5, the sponge iron is melted in a melt-down gasification zone (I to IV) under supply of carbon carriers and an oxygen-containing gas, and a CO- and H2-containing reducing gas is generated, which is supplied to the reduction zone, is reacted there, is drawn off as an export gas and is supplied to a consumer.

7. Use of a vessel (1) **characterized by** the combination of the following characteristic features for carrying out the method according to one or several of claims 1 to 6:

   • a cylindrical lower fluidized-bed section (3) receiving the fluidized bed (2) and including a gas-distribution bottom (4), a feed duct (35, 37) for the treating gas, and a supply means and a discharge means for particulate material provided above the gas-distribution bottom (4),

   • a cone-shaped section (9) arranged above the fluidized-bed section (3) so as to follow upon the same and widening conically upwards, the inclination of the wall (10) of the cone-shaped section (9) relative to the central axis (11) of the reactor amounting to from 6 to 15°, preferably from 8 to 10°,

   • an at least partially cylindrical calming section (15) following upon the cone-shaped section (9) and closed on top, and from which a treating-gas discharge duct (26, 37) departs,

   • the ratio of the cross-sectional area (19) of the calming section (15) in the cylindrical region to the cross-sectional area (20) of the fluidized bed section (3) being ≥ 2.

8. The use according to claim 7, **characterized in that** the cross-sectional area (19) of the calming space (15) of the vessel (1) in the cylindrical region is large enough for an empty-tube velocity adjusting in this region that would be sufficient for separating from the gas a grain having a grain size of above 50 μm.

9. The use of a plant for the production of liquid pig iron or liquid steel pre-products, comprising at least one vessel configured as a reduction reactor (1, 1', 1") and distinguished by the characteristic features of the vessel described in claim 7 or 8, into which vessel a conveyor duct (5) for charging substances containing iron ore and fluxes, a gas duct (27, 28) for a reducing gas as well as a conveyor duct (6) for the reduction product formed therein and a gas duct (30) for the top gas run, and comprising a melter gasifier (25) into which the conveyor duct (6) carrying the reduction product from the reduction reactor (1, 1', 1") runs and which exhibits feed ducts (32, 33) for oxygen-containing gases and carbon carriers as well as a tap (34) for pig iron or a steel prematerial and slag, respectively, wherein the gas duct (27) for reducing gas formed in the melter gasifier (25), which gas duct runs into the reduction reactor (1, 1', 1"), originates from the melter gasifier (25) and the reduction reactor is configured as a fluidized-bed reduction reactor (1, 1', 1"), for carrying out the method according to claim 6.

**Revendications**

1. Procédé de traitement, de préférence pour la réduction de matériau contenant des oxydes, se présentant sous la forme de particules, dans un procédé à couche tourbillonnaire ou lit fluidisé, en particulier pour réduire des fines de minerai, le matériau particulaire étant maintenu dans une couche tourbillonnaire (2) par un gaz de traitement, en particulier un gaz de réduction s'écoulant du bas vers le haut et étant alors traité, en particulier réduit, **caractérisé en ce que** du matériau particulaire, ayant une large distribution de granularités et ayant une proportion en fines relativement élevées et une proportion en particules plus grande, est utilisé pour le traitement, le diamètre moyen de grain de la bande de granularité étant de 0,02 à 0,15 du diamètre maximal de grain du matériau particulaire, et **en ce que** la vitesse dans un tube vide du gaz de traitement dans la couche tourbillonnaire (2) est maintenue à une plus faible valeur que la vitesse nécessaire pour obtenir une fluidisation des particules de taille maximale du matériau particulaire, l'ensemble des particules plus grosses, conjointement avec la proportion de fines, étant déplacé vers le haut et expulsé de la zone supérieure de la couche tourbillonnaire ou lit fluidisé.

2.  Procédé selon la revendication 1, **caractérisé en ce que** la vitesse dans un tube vide, dans la couche tourbillonnaire (2), est dans une plage de 0,25 à 075 de la vitesse nécessaire pour obtenir la fluidisation des particules de taille maximale du matériau particulaire.

3.  Procédé selon la revendication 1 ou 2, **caractérisé en ce qu'**on utilise un matériau particulaire ayant un grain dont la taille de grain moyenne de la bande de granularité est de 0,05 à 0,10 fois le diamètre maximal de grain du matériau particulaire.

4.  Procédé selon l'une ou plusieurs des revendications 1 à 3, **caractérisé en ce que**, pour le gaz de traitement, au-dessus de la couche tourbillonnaire (2), on règle une vitesse dans un tube vide par rapport à la section transversale maximale d'un récipient recevant la couche tourbillonnaire (2), pour une taille limite théorique de 50 à 150 $\mu$m, de préférence de 60 à 100 $\mu$m.

5.  Procédé selon la revendication 4, **caractérisé en ce que**, pour la réduction des fines de minerai "Run of Mine", on règle une vitesse dans un tube vide, dans la couche tourbillonnaire (2), comprise entre 0,3 m/s et 2,0 m/s.

6.  Procédé de fabrication de fer brut liquide ou de pré-produits à base d'acier, liquides, à partir de substances formées par des minerais de fer et des additifs, présentant au moins partiellement une proportion de fines, les substances étant réduites directement en au moins une zone de réduction, suivant un procédé à couche tourbillonnaire selon l'une ou plusieurs des revendications 1 à 5 pour donner une éponge de fer, l'éponge de fer étant fondue dans une zone de gazéification avec mise en fusion (I à IV) avec apport de porteurs de carbone et de gaz contenant de l'oxygène, et un gaz de réduction contenant du CO et du H2 étant produit, gaz introduit dans la zone de réduction, y étant converti, extrait sous forme de gaz d'export et amené à un consommateur.

7.  Utilisation d'un récipient (1), **caractérisée par** la combinaison des caractéristiques suivantes, pour mise en oeuvre du procédé selon l'une ou plusieurs des revendications 1 à 6 :

    *   une partie de couche tourbillonnaire (3) inférieure cylindrique, recevant la couche tourbillonnaire ou lit fluidisé (2) avec un fond de distribution de gaz (4), une conduite d'alimentation (35, 37) pour le gaz de traitement, et une amenée et une évacuation du matériau particulaire au-dessus du fond de distribution de gaz (4),
    *   une partie conique (9), disposée au-dessus de la partie de couche tourbillonnaire (3) et se raccordant à celle-ci et allant en s'élargissant vers le haut de façon conique, l'inclinaison de la paroi (10) de la partie conique (9) par rapport à l'axe de réacteur (11) étant de 6 à 15°, de préférence de 8 à 10°,
    *   une partie de tranquillisation (15) au moins partiellement cylindrique se raccordant à la partie conique (9), fermée en partie haute et d'où part une conduite d'évacuation de gaz de traitement (26, 37), où
    *   le rapport entre l'aire de la section transversale (19) de la partie de tranquillisation (15) dans la zone cylindrique et la surface de section transversale (20) de la partie de couche tourbillonnaire (3) est $\geq 2$.

8.  L'utilisation selon la revendication 7, **caractérisée en ce que** l'aire de section transversale (19) de l'enceinte de tranquillisation (15) du récipient (1), dans la zone cylindrique, étant d'une taille telle que, dans cette zone, s'établit une vitesse dans un tube vide, qui suffirait à produire la séparation d'un grain de taille supérieur à 50 $\mu$m vis-à-vis du gaz.

9.  Utilisation d'une installation de production de fer brut liquide ou de pré-produits à base d'acier, liquides, avec au moins un récipient réalisé en tant que réacteur de réduction (1, 1', 1") et présentant les propriétés du récipient décrit dans la revendication 7 ou 8, récipient dans lequel une conduite de transfert (5) pour du minerai de fer et des matériaux contenant des additifs, une conduite de gaz (27, 28) pour un gaz de réduction, ainsi qu'une conduite de transfert (6) pour le produit de réduction formé en lui, et une conduite de gaz (30) pour le gaz de tête (Topgas) débouchent, et avec un gazéificateur à fusion (25), dans lequel débouche la conduite de transfert (6) guidant le produit de réduction venant du réacteur de réduction (1, 1', 1") et présentant des conduites (32, 33) pour des gaz contenant de l'oxygène et un support de carbone, ainsi qu'un piquage (34) pour le fer brut ou le matériau préliminaire à base d'acier et les scories ou laitiers, la conduite de gaz (27) débouchant dans le réacteur de réduction (1, 1', 1"), pour le gaz de réduction formé dans le gazéificateur à fusion (25), partant du gazéificateur à fusion (25), et le réacteur de réduction étant réalisé sous la forme de réacteur de réduction à couche tourbillonnaire (1, 1', 1"), pour mise en oeuvre du procédé selon la revendication 6.

FIG. 1

FIG. 2

EP 0 958 386 B1

11

Korngrößenverteilung von Feineisenerzen

FIG. 3

Gew.-%

Korngröße [mm]

EP 0 958 386 B1